# EUROPÄISCHE PATENTSCHRIFT

(11) **EP 3 699 637 B1**
(45) Veröffentlichungstag und Bekanntmachung des Hinweises auf die Patenterteilung: **13.01.2021**
(21) Anmeldenummer: 19158884.7
(22) Anmeldetag: 22.02.2019
(51) Int. Cl.: G01S 17/06, G01S 7/481, G01S 17/42

(54) **OPTOELEKTRONISCHER SENSOR UND VERFAHREN ZUR ERFASSUNG EINES OBJEKTS**
OPTOELECTRONIC SENSOR AND METHOD FOR DETECTING AN OBJECT
CAPTEUR OPTOÉLECTRONIQUE ET PROCÉDÉ DE DÉTECTION D'UN OBJET

(43) Veröffentlichungstag der Anmeldung: 26.08.2020
(73) Patentinhaber: SICK AG, 79183 Waldkirch (DE)
(72) Erfinder: Buser, Roger, 79106 Freiburg (DE)

(56) Entgegenhaltungen:
- EP-B1- 2 378 309
- DE-A1-102014 111 138
- DE-B3-102012 102 395
- US-A- 5 903 379

## Beschreibung

Die Erfindung betrifft einen optoelektronischen Sensor, insbesondere einen Laserscanner, und ein Verfahren zur Erfassung eines Objekts in einem Überwachungsbereich nach dem Oberbegriff von Anspruch 1 beziehungsweise 14.

Für Abstandsmessungen, die einen großen horizontalen Winkelbereich des Messsystems erforderlich machen, eignen sich optoelektronische Systeme und besonders Laserscanner. In einem Laserscanner überstreicht ein von einem Laser erzeugter Lichtstrahl mit Hilfe einer Ablenkeinheit periodisch einen Überwachungsbereich. Das Licht wird an Objekten in dem Überwachungsbereich remittiert und in dem Scanner ausgewertet. Aus der Winkelstellung der Ablenkeinheit wird auf die Winkellage des Objektes und aus der Lichtlaufzeit unter Verwendung der Lichtgeschwindigkeit in einem Phasen- oder Pulsverfahren zusätzlich auf die Entfernung des Objektes von dem Laserscanner geschlossen.

Mit den Winkel- und Entfernungsangaben ist der Ort eines Objektes in dem Überwachungsbereich in zweidimensionalen Polarkoordinaten erfasst. Damit lassen sich die Positionen von Objekten ermitteln oder deren Kontur bestimmen Die dritte Raumkoordinate kann durch eine Relativbewegung in Querrichtung ebenfalls erfasst werden, beispielsweise durch einen weiteren Bewegungsfreiheitsgrad der Ablenkeinheit in dem Laserscanner oder indem das Objekt relativ zu dem Laserscanner befördert wird. So können auch dreidimensionale Konturen ausgemessen werden.

Neben solchen Messanwendungen werden Laserscanner auch in der Sicherheitstechnik zur Überwachung einer Gefahrenquelle eingesetzt, wie sie beispielsweise eine gefährliche Maschine darstellt. Ein derartiger Sicherheitslaserscanner ist aus der DE 43 40 756 A1 bekannt. Dabei wird ein Schutzfeld überwacht, das während des Betriebs der Maschine vom Bedienpersonal nicht betreten werden darf. Erkennt der Laserscanner einen unzulässigen Schutzfeldeingriff, etwa ein Bein einer Bedienperson, so löst er einen Nothalt der Maschine aus. In der Sicherheitstechnik eingesetzte Sensoren müssen besonders zuverlässig arbeiten und deshalb hohe Sicherheitsanforderungen erfüllen, beispielsweise die Norm EN13849 für Maschinensicherheit und die Gerätenorm EN61496 für berührungslos wirkende Schutzeinrichtungen (BWS).

Der Laserscanner wird von einem Gehäuse geschützt, das eine umlaufende Frontscheibe aufweist, um den scannenden Lichtstrahl aus- und eintreten zu lassen. Es gibt Bauformen mit verschiedenen Geometrien der Frontscheibe. Eine zylindrische Frontscheibe wird häufig vermieden, damit nicht durch senkrechtes Auftreffen ein direkter Reflex des Sendelichts auf dem Lichtempfänger entsteht. Eine schräggestellte Frontscheibe spiegelt den Reflex seitlich am Lichtempfänger vorbei, und in der rotationssymmetrischen Form ergibt das einen Kegelstumpf. Ein Laserscanner gemäß EP 2 447 733 A1 verwendet eine kelchförmige Frontscheibe, die DE 103 31 529 A1 eine kugelförmige Frontscheibe.

Demnach ist der Durchtrittbereich der Frontscheibe für den Scanstrahl nicht eben, sondern gekrümmt, und hat dementsprechend zwangsläufig einen Einfluss auf den Verlauf der Strahlenbündel. Dieser Einfluss wird jedoch bisher nicht oder jedenfalls nicht ausreichend beachtet. Das liegt auch darin begründet, dass bei den üblichen Baugrößen herkömmlicher Laserscanner die Krümmung über den Strahlquerschnitt und damit die strahlformende Wirkung der Frontscheibe noch relativ klein ist. Mit zunehmender Miniaturisierung der Laserscanner werden jedoch auch die Krümmungen der Frontscheibe stärker ausgeprägt.

Einige Laserscanner geben dem als Ablenkeinheit fungierenden Drehspiegel eine Kontur und nutzen ihn so als strahlformenden Teil der Sende- beziehungsweise Empfangsoptik. Das wird aber nicht in Zusammenhang mit strahlformenden Eigenschaften der Frontscheibe gebracht. So ersetzt beispielsweise in der EP 2 378 309 B1 ein parabolischer Mehrzonenspiegel die sonst übliche Mehrzonenlinse der Empfangsoptik.

Andere herkömmliche Laserscanner verwenden ein Polygonspiegelrad mit einer Vielzahl von Facetten anstelle eines einfachen Drehspiegels. Dadurch wird ein kleinerer Winkelbereich je Umdrehung mehrfach abgetastet. Bei solchen Laserscannern ist aber die Frontscheibe flach und erzeugt so lediglich einen Versatz, der durch entsprechende Justierung in dem Laserscanner beziehungsweise Umrechnung der Messpunkte sehr einfach kompensierbar ist. Bei solchen Polygonspiegelrädern sind auch gekrümmte Spiegelfacetten bekannt, die aber mangels strahlformender Wirkung der Frontscheibe zwangsläufig nicht deren Korrektur dienen.

Aus der DE 10 2014 111 138 A1 ist ein entsprechender Laserscanner mit mehreren gegeneinander verkippten Spiegelfacetten bekannt, um mehrere Ebenen abzutasten. Durch die Verkippung werden die Abtastebenen verformt, und diese Verzerrung wird durch Krümmungen der Spiegelfacetten ausgeglichen.

Die noch unveröffentlichte Patentanmeldung mit dem Aktenzeichen DE 10 2017 127 420 offenbart einen weiteren Polygonscanner mit Spiegelfacetten, die als Freiformflächen Krümmungen ausgebildet sind. Die Krümmung dient dazu, sich an die unterschiedlichen Einfallswinkel auf die Spiegelfacette während der Drehung des Spiegelrads anzupassen.

Aus der US 5 903 379 ist ein Polygonscanner bekannt, dessen Polygonradspiegel von einem Spiegelschutz umgeben ist, das für den Aus- und Eintritt des Sendelichtstrahls zum Spiegel hin und vom Spiegel weg eine transparente Platte aufweist. Um den durch diese transparente Platte erzeugten Versatz auszugleichen, wird eine weitere transparente Kompensationsplatte im Strahlengang zwischen Spiegel und Objektbereich angeordnet.

Es ist daher Aufgabe der Erfindung, die Erfassungseigenschaften eines gattungsgemäßen optoelektronischen Sensors zu verbessern.

Diese Aufgabe wird durch einen optoelektronischen Sensor, insbesondere einen Laserscanner, und ein Verfahren zur Erfassung eines Objekts in einem Überwachungsbereich nach Anspruch 1 beziehungsweise 14 gelöst. Ein Lichtsender erzeugt Sendelicht und sendet es in den Überwachungsbereich aus. Mit Hilfe einer beweglichen Ablenkeinheit wird eine periodische Scanbewegung des Sendelichts erzeugt. Das Sendelicht wird als remittiertes Sendelicht wieder empfangen, nachdem es zumindest teilweise im Überwachungsbereich von einem Objekt zurückgeworfen wurde. Das entsprechende Empfangssignal eines Lichtempfängers wird ausgewertet, um eine optisch erfassbare Information über das Objekt zu gewinnen, wie eine binäre Anwesenheitsinformation, einen Abstand, eine Position oder auch eine Farbe. Das Sendelicht und remittierte Sendelicht tritt durch eine umlaufende Frontscheibe aus dem Sensor in den Überwachungsbereich beziehungsweise wieder in den Sensor hinein. Umlaufend bedeutet, dass die Frontscheibe zumindest den Winkelbereich des scannenden Sendelichts abdeckt.

Die Erfindung geht von dem Grundgedanken aus, strahlformende Einflüsse der Frontscheibe auf das Sendelicht beziehungsweise remittierte Sendelicht auszugleichen.

Durch die Krümmung der Frontscheibe im Durchtrittbereich erfahren die einzelnen Strahlen des von dem Sendelicht oder remittierten Sendelicht gebildeten Strahlenbündels unterschiedliche Ablenkungen. Dieser Effekt ist stark astigmatisch und kann daher mit einem ruhenden Element, beispielsweise Eigenschaften der Sende- oder Empfangsoptik, nicht aufgefangen werden. Deshalb wird ein optisches Element mit der Ablenkeinheit mitbewegt, das diese Effekte der Frontscheibe wieder korrigiert.

Die Erfindung hat den Vorteil, dass die Abbildungseigenschaften in dem Sensor verbessert werden. Da die Störeinflüsse der Frontscheibe ausgeglichen sind, kann ein deutlich kleinerer Empfangslichtfleck auf dem Lichtempfänger erzeugt werden. Dadurch wird das Nutzlicht auf einer kleinen Empfangsfläche möglichst vollständig und mit minimalem Fremdlichtanteil erfasst, wodurch sich das Signal-Rauschverhältnis und in dessen Folge Messgenauigkeit und Reichweite erhöhen lassen.

Die bewegliche Ablenkeinheit ist erfindungsgemäß als Drehspiegel mit einer Spiegelfläche ausgebildet. Typischerweise steht der Drehspiegel in einem Winkel von 45°, so dass die Strahlen längs der Drehachse erzeugt beziehungsweise empfangen werden und durch die 90°-Umlenkung mit dem Drehspiegel eine Ebene senkrecht zu der Drehachse abgetastet wird. Es sind alternativ Laserscanner bekannt, in denen sich der gesamte Messkopf mit Lichtsender und Lichtempfänger dreht.

Die Spiegelfläche weist erfindungsgemäß eine Krümmung auf und fungiert so als das mitbewegte optische Element. Mit anderen Worten ist der Drehspiegel selbst das mitbewegte optische Element. Alternativ ist es möglich, ein zusätzliches optisches Element auf der Ablenkeinheit unterzubringen, das sich dann ebenfalls mitbewegt. Indem der Drehspiegel selbst als das mitbewegte optische Element genutzt wird, lässt sich die Korrektur der optischen Effekte der Frontscheibe mit besonders geringem Aufwand erreichen. Die Ablenkeinheit ist ohnehin notwendig und muss lediglich entsprechend gestaltet werden. Außerdem sind keine zusätzlichen Massen zu bewegen, so dass der Antrieb für die periodische Bewegung einfach bleiben kann.

Die Spiegelfläche ist vorzugsweise als Freiform ausgebildet. Die Funktion, mit der die Form der Spiegelfläche beschrieben wird ("surface sag"), ist also prinzipiell frei definierbar. Die benötigte Form der Spiegelfläche zur Korrektur der Effekte der Frontscheibe hängt von zahlreichen Bedingungen ab, wie der Geometrie der Frontscheibe, den Strahlverläufen, den Weglängen und den Durchtrittbereichen von Sendelicht und remittiertem Sendelicht. Eine Freiform bietet die Flexibilität beliebiger lokaler Anpassung der Krümmung, um diesen zahlreichen Bedingungen gerecht zu werden.

Die Spiegelfläche ist bevorzugt derart geformt, dass ein paralleles Strahlenbündel, das an dem Drehspiegel reflektiert wird und die Frontscheibe durchdringt, wiederum parallel ist. Das ist eine mögliche Beschreibung dafür, dass das optische System aus Drehspiegel und Frontscheibe in gewisser Weise invariant ist, sich also auf die Strahlformung nicht auswirkt. Nach einer alternativen Formulierung ist die Krümmung bevorzugt derart ausgebildet ist, dass die refraktiven Einflüsse der Frontscheibe auf hindurchtretendes Sendelicht und/oder remittiertes Sendelicht invertiert werden. Das betrifft den Strahlwinkel, die Position quer zum Strahlenverlauf kann sich ändern. Dabei ist die Formgebung der Spiegelfläche nicht allein anhand der Geometrie der Frontscheibe, sondern anhand der Strahlverläufe zu bestimmen.

Alternativ korrigiert das mitbewegte optische Element nicht sämtliche Einflüsse der Frontscheibe, sondern nur den astigmatischen Anteil. Eine Fokussierungswirkung beispielsweise kann durchaus erwünscht sein und erhalten bleiben. Auch ist denkbar, dass das mitbewegte optische Element zusätzlich als Teil der Sende- und Empfangsoptik und beispielsweise das remittierte Sendelicht schon zumindest teilweise bündelt oder sogar die Sende- beziehungsweise Empfangsoptik ersetzt.

Die Form der Spiegelfläche ist bevorzugt durch eine Strahlverfolgungssimulation bestimmt, bei der für eine Vielzahl senkrecht auf die Frontscheibe auftreffender Strahlen der jeweilige Auftreffort auf der Spiegelfläche und dort eine kompensierende lokale Orientierung der Spiegelfläche bestimmt wird. Dabei wird ein jeweiliger senkrecht auf die Frontscheibe auftreffender Strahl bis zur Spiegelfläche verfolgt (ray tracing). Für den Auftreffort lässt sich dann eine Orientierung des entsprechenden Flächenstücks der Spiegelfläche bestimmen, welcher den durch die Frontscheibe eingeführten Versatz wieder rückgängig macht. So entsteht mit jedem Strahl eine weitere Stützstelle der benötigten lokalen Orientierung der Flächenstücke der Spiegelfläche. Diese Gradienten lassen sich dann zu der benötigten Spiegelfläche integrieren, beispielsweise in einem numerischen Verfahren oder auch durch Funktionsfit beispielsweise mit einem zweidimensionalen Polynom einer Ordnung, die als Kompromiss aus Aufwand und Genauigkeit gewählt wird.

Die Frontscheibe ist erfindungsgemäß zumindest im Durchtrittbereich rotationssymmetrisch geformt und erzeugt so einen Bündelungseffekt in einer lateralen Richtung. Dabei soll ohne Beschränkung der Allgemeinheit für hier und die nachfolgende Beschreibung ein kartesisches Koordinatensystem vereinbart sein, in dem die Z-Achse durch den Abtaststrahl des Sendelichts gebildet ist, die X-Achse oder laterale Richtung die zu der Z-Achse senkrechte Richtung in der Abtastebene und die Y-Achse die zur Drehachse parallele Höhenrichtung ist. Eine rotationssymmetrische Frontscheibe bietet dem Sendelicht während der Drehbewegung jeweils die gleiche Kontur des Durchtrittbereichs. Dabei muss der Rotationskörper nicht über 360° reichen, sondern nur mindestens über den relevanten Winkelbereich, in dem der Sensor tatsächlich detektiert. Durch die Krümmung in lateraler Richtung ergibt sich ein Bündelungseffekt ähnlich einer Zylinderlinse. Dementsprechend weist auch die Spiegelfläche vorzugsweise eine kompensierende Krümmung in X-Richtung auf.

Die Spiegelfläche ist bevorzugt in der lateralen Richtung symmetrisch zu einer Mittenachse des Drehspiegels gekrümmt. Eine rotationssymmetrische Frontscheibe bietet dem Sendelicht eine in lateraler Richtung symmetrische Kontur, und dementsprechend sollte auch die kompensierende Krümmung symmetrisch sein. Von der Mittenachse krümmt sich demnach die Spiegelfläche nach rechts und links in gleicher Weise, vorzugsweise monoton wachsend.

Die Frontscheibe und daher auch die Spiegelfläche weisen bevorzugt in einer Höhenrichtung keine Krümmung auf. Die Höhenrichtung ist die zu der lateralen Richtung senkrechte zweite Richtung auf der Fläche der Frontscheibe. In dieser Richtung findet keine Scanbewegung statt. Der einfachste derartige Rotationskörper ist ein Zylinder, wobei zur Vermeidung einer Eigenblendung stattdessen vorzugsweise ein Kegelstumpf verwendet wird. Es gibt dann in Höhenrichtung keine strahlformende Wirkung der Frontscheibe, und daher wird auch die Spiegelfläche in Höhenrichtung nicht gekrümmt. Mit einer zur Mittenachse symmetrischen Krümmung in lateraler Richtung ergibt sich eine Geometrie ähnlich einem aus einem Zylindermantel geschnittenen Ellipsenstück oder anschaulich einer Chipslette, wobei die Krümmung in lateraler Richtung nicht konstant sein muss.

Die Frontscheibe weist alternativ in Höhenrichtung eine Krümmung auf, ist insbesondere kugel- oder kelchförmig geformt, wobei die Spiegelfläche eine Krümmung in lateraler Richtung und in Höhenrichtung aufweist. Bei komplizierterer Geometrie der Frontscheibe ist auch in Höhenrichtung eine Krümmung der Spiegelfläche erforderlich.

Der Drehspiegel ist bevorzugt als Spritzgussteil hergestellt. Damit ist es besonders einfach, der Spiegelfläche die gewünschte Form zu geben, indem ein Spritzgusswerkzeug mit entsprechender Kontur anstelle einer ebenen Fläche verwendet wird. Die erfindungsgemäße Kompensation wird dann abgesehen von dem einmaligen Entwerfen der Kontur für das Werkzeug praktisch ohne Zusatzaufwand oder Mehrkosten erzielt.

Die Spiegelfläche ist bevorzugt die einzige Spiegelfläche des Drehspiegels. Es handelt sich also um kein Polygonspiegelrad.

Der Drehspiegel weist bevorzugt einen Durchmesser von mindestens 50%, mindestens 60%, mindestens 70%, mindestens 80% oder mindestens 90% des Durchmessers der Frontscheibe auf. Sofern die Frontscheibe keinen einheitlichen Durchmesser aufweist, lässt sich diese Bedingung wahlweise auf jede Höhe der Frontscheibe anwenden, insbesondere auf den kleinsten Durchmesser. In vielen herkömmlichen Laserscannern ist der Drehspiegel klein gegenüber der Fronscheibe. Im Zuge der Miniaturisierung wird natürlich auch die Frontscheibe kleiner, die Strahlquerschnitte lassen sich aber kaum verringern, und daher wird der Drehspiegel im Vergleich zum übrigen Sensor größer, bis hin zu den baulichen Grenzen eines größtmöglichen Drehspiegels in einer gegebenen Frontscheibengeometrie. Dann treten auch die strahlformenden Einflüsse der Frontscheibe deutlicher zu Tage, und die Vorteile der erfindungsgemäßen Kompensation werden noch größer.

Der Sensor weist bevorzugt eine refraktive Sende- und/oder Empfangsoptik auf. Der Drehspiegel ersetzt also die herkömmliche Optik nicht, sondern die Krümmung der Spiegelfläche hat nur die Funktion, die Einflüsse der Frontscheibe auszugleichen. Allerdings ist denkbar, dass die Formgebung der Spiegelfläche die übrigen Optiken unterstützt und beispielsweise schon eine gewisse Fokussierung leistet.

Die Steuer- und Auswertungseinheit ist bevorzugt dafür ausgebildet, aus einer Lichtlaufzeit zwischen Aussenden des Sendelichts und Empfangen des remittierten Sendelichts einen Abstand des Objekts zu bestimmen. Damit entsteht ein entfernungsmessender Sensor, und es wird als Messinformation über das Objekt dessen Abstand bestimmt. Gerade bei hohen Reichweiten, viel Umgebungslicht und/oder schlecht remittierenden, dunklen Objekten, ist der Nutzlichtanteil häufig sehr gering, so dass ein Lichtlaufzeitverfahren stark von der verbesserten Fremdlichtunterdrückung profitiert.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Darstellung eines Laserscanners;
- Fig. 2: eine Darstellung des Strahlenverlaufs in einem Laserscanner ohne Korrektur der Einflüsse der Frontscheibe;
- Fig. 3: eine Ausschnittdarstellung des Strahlenverlaufs der Figur 2 im Bereich möglicher Positionen des Lichtempfängers;
- Fig. 4: eine beispielhafte Darstellung von Strahlenverläufen durch die Frontscheibe;
- Fig. 5: eine vereinfachte dreidimensionale Ansicht eines Laserscanners mit als Freiform ausgebildetem Drehspiegel;
- Fig. 6: eine Darstellung des als Freiform ausgebildeten Drehspiegels gemäß Figur 5; und
- Fig. 7: eine beispielhafte Darstellung der Krümmung einer Freifläche für einen die Einflüsse der Frontscheibe kompensierenden Drehspiegel.

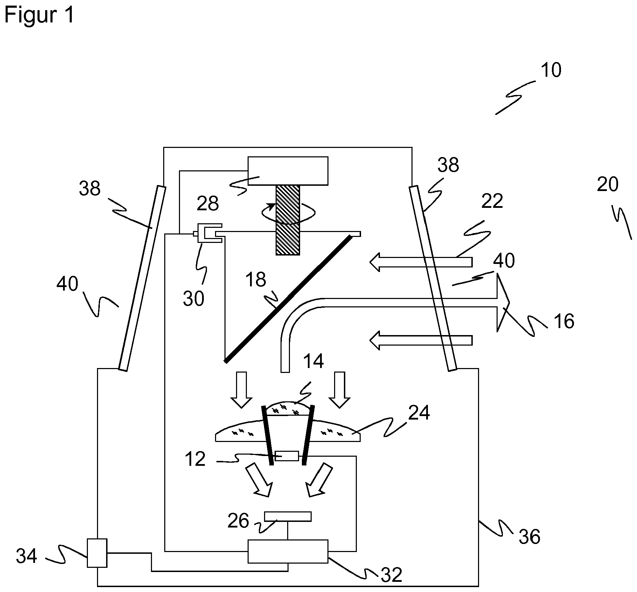

Fig. 1 zeigt eine schematische Schnittdarstellung durch einen erfindungsgemäßen optoelektronischen Sensor in einer Ausführungsform als Laserscanner 10. Ein Lichtsender 12, beispielsweise mit einer Laserlichtquelle, erzeugt mit Hilfe einer Sendeoptik 14 einen Sendelichtstrahl 16. Der Sendelichtstrahl 16 wird mittels einer Ablenkeinheit 18 in einen Überwachungsbereich 20 ausgesandt und dort von einem gegebenenfalls vorhandenen Objekt remittiert. Das remittierte Sendelicht 22 gelangt wieder zu dem Laserscanner 10 zurück und wird über die Ablenkeinheit 18 mittels einer Empfangsoptik 24 von einem Lichtempfänger 26 detektiert, beispielsweise einer Photodiode oder für höhere Empfindlichkeit einer Lawinenphotodiode (APD) beziehungsweise einer Anordnung mit mindestens einer Einzelphotonlawinendiode (SPAD, SiPM).

Bei dem dargestellten Laserscanner 10 befindet sich der Lichtsender 12 und dessen Sendeoptik 14 in einer zentralen Öffnung der Empfangsoptik 24. Dies ist nur eine beispielhafte Möglichkeit der Anordnung. Die Erfindung umfasst daneben alternative koaxiale Lösungen, etwa mit einem eigenen Spiegelbereich für den Sendelichtstrahl 16 oder mit Teilerspiegeln, und auch biaxiale Anordnungen.

Die Ablenkeinheit 18 wird von einem Motor 28 in eine kontinuierliche Drehbewegung mit einer Scanfrequenz versetzt. Dadurch tastet der Sendelichtstrahl 16 während jeder Scanperiode, also einer vollständigen Umdrehung bei der Scanfrequenz, eine Ebene ab. Die Ablenkeinheit 18 erscheint in Figur 1 als flacher Drehspiegel. Wie später unter Bezugnahme auf die weiteren Figuren erläutert, weist die Spiegelfläche erfindungsgemäß eine Kontur beziehungsweise Krümmung auf. Alternativ ist ein zusätzliches optisches Element vorgesehen, das mit der Ablenkeinheit 18 verbunden ist.

Am Außenumfang der Ablenkeinheit 18 ist eine Winkelmesseinheit 30 angeordnet, um die jeweilige Winkelstellung der Ablenkeinheit 18 zu erfassen. Die Winkelmesseinheit 30 wird hier beispielhaft von einer Strichscheibe als Winkelmaßverkörperung und einer Gabellichtschranke als Abtastung gebildet.

Eine Steuer- und Auswertungseinheit 32 ist mit dem Lichtsender 12, dem Lichtempfänger 26, dem Motor 28 und der Winkelmesseinheit 30 verbunden. Durch Bestimmen der Lichtlaufzeit zwischen Aussenden des Sendelichtstrahls 16 und Empfang von remittiertem Sendelicht 22 wird unter Verwendung der Lichtgeschwindigkeit auf die Entfernung eines angetasteten Objektes von dem Laserscanner 10 geschlossen. Die jeweilige Winkelstellung, unter welcher dabei der Sendelichtstrahl 16 ausgesandt wurde, ist der Auswertungseinheit von der Winkelmesseinheit 30 bekannt.

Somit stehen nach jeder Scanperiode über den Winkel und die Entfernung zweidimensionale Polarkoordinaten der Objektpunkte in dem Überwachungsbereich 20 zur Verfügung, und entsprechende Messdaten können über eine Schnittstelle 34 übertragen werden. Bei Anwendungen in der Sicherheitstechnik kann die Schnittstelle 34 sicher ausgebildet, insbesondere ein sicherer Ausgang (OSSD, Output Signal Switching Device) für ein sicherheitsgerichtetes Abschaltsignal bei Erkennen einer Schutzfeldverletzung sein.

Der Laserscanner 10 ist in einem Gehäuse 36 untergebracht, welches eine umlaufende Frontscheibe 38 aufweist. Umlaufend bedeutet, dass die Frontscheibe 38 den Winkelbereich abdeckt, den der scannende Sendelichtstrahl 16 beziehungsweise das remittierte Sendelicht 22 überstreicht. Dazu ist die Frontscheibe 38 vorzugsweise als Rotationskörper um die Drehachse der Ablenkeinheit 18 geformt. Da nicht jeder Laserscanner einen 360°-Sichtbereich aufweist, kann ein Rotationskörper über einen entsprechenden Winkelbereich genügen. Die Frontscheibe 38 ist in Figur 1 im nicht optisch aktiven Bereich außerhalb eines Durchtrittbereichs 40 für Sendelichtstrahl 16 und remittiertes Sendelicht 22, insbesondere im Deckelbereich, durch ein intransparentes Gehäuseteil abgeschlossen. Alternativ ist eine Art transparente Haube möglich, welche die Frontscheibe 38 umfasst und den gesamten oberen Teil des Gehäuses 36 bildet.

Die gezeigte Form der optisch aktiven Frontscheibe 38 ist ein Kegelstumpfmantel. Andere denkbare Formen sind ein zylindrischer Mantelabschnitt, Rotationskörper mit einer gekrümmten statt gerade Erzeugenden, die beispielsweise kelchförmig aussehen, Abschnitte einer Kugel oder eines Ellipsoids und ganz allgemein irgendeine geeignete, komplexe 3D-Freiform.

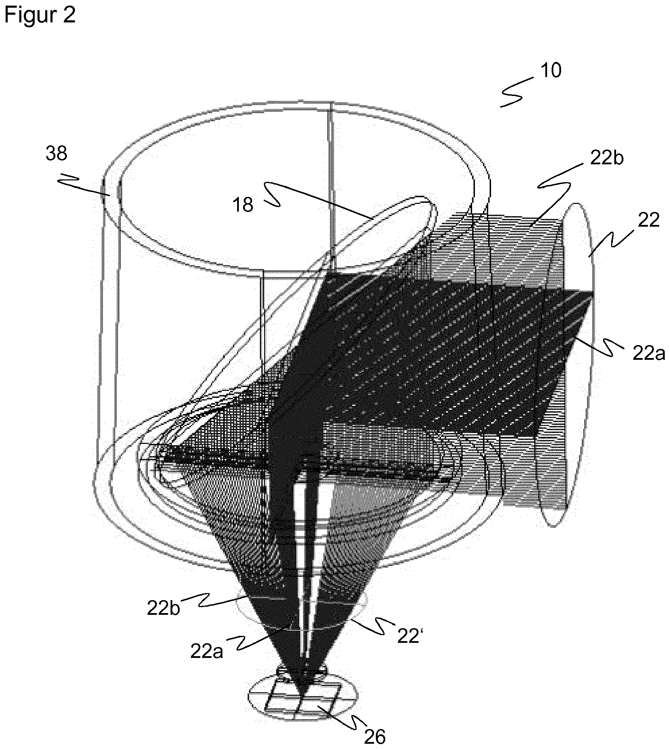

Figur 2 zeigt den Strahlenverlauf in einem derartigen Laserscanner 10, wenn die Ablenkeinheit 18 wie herkömmlich als flacher Drehspiegel ausgebildet ist. Die Frontscheibe 38 lässt den Sendelichtstrahl 16 und das in Figur 2 dargestellte remittierte Sendelicht 22 nicht einfach passieren, sondern wirkt selbst als strahlformendes optisches Element. Wegen der Krümmung der Frontscheibe 38 in lateraler oder umlaufender Richtung, die auch als X-Richtung bezeichnet wird, und der flachen Form in dazu senkrechter Höhen- oder Y-Richtung ist die strahlformende Wirkung stark astigmatisch.

Das wird in Figur 2 illustriert, indem nicht der gesamte Strahlquerschnitt 22' des remittierten Sendelichts 22 durch seine Einzelstrahlen repräsentiert wird, sondern nur ein dunkel dargestelltes Strahlenbündel 22a in X-Richtung und ein heller dargestelltes Strahlenbündel 22b in Y-Richtung. Die Strahlenbündel 22a-b erfahren in der Frontscheibe 38 eine Refraktion ähnlich einer Zylinderlinse, die Wirkung aber wegen der Kegelstumpfform der Frontscheibe 38 auch eine Abhängigkeit in Y-Richtung zeigt.

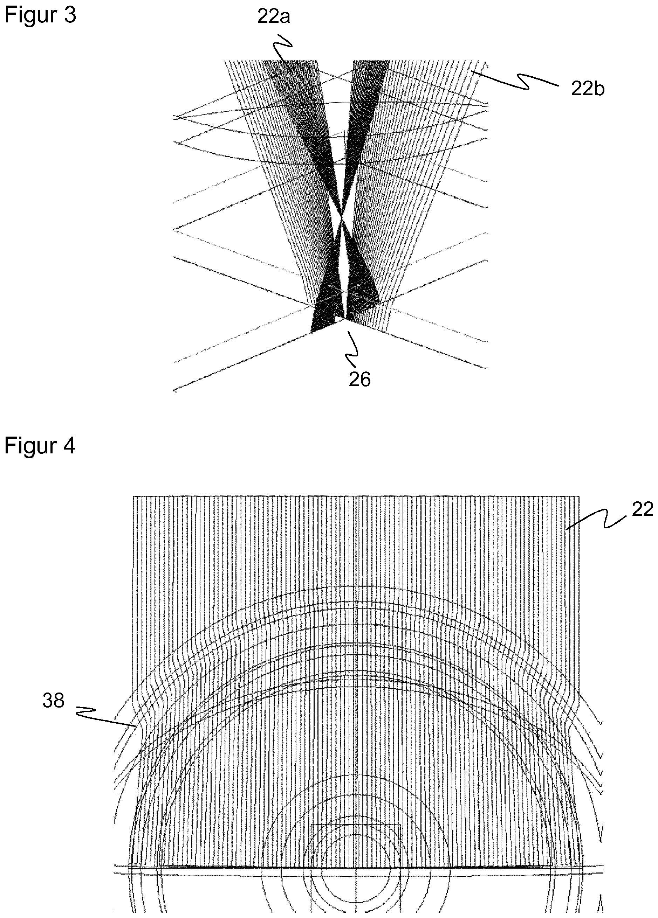

Figur 3 ist eine Ausschnittdarstellung des unteren Bereichs des Strahlenverlaufs. Wegen des herkömmlichen flachen Drehspiegels bleibt die optische Wirkung der Frontscheibe 38 mit ihrem starken Astigmatismus unkorrigiert und daher erhalten. Wünschenswert wäre eine Höhe in Figur 3 mit minimalem Strahlquerschnitt in X- und in Y-Richtung, auf welcher der Lichtempfänger 26 platziert werden könnte. Eine solche Idealposition mit minimaler Ausdehnung des Empfangslichtflecks gibt es aber nicht, weil durch den Astigmatismus die schmalste Ausdehnung in X-Richtung auf deutlich anderer Höhe auftritt als die schmalste Ausdehnung in Y-Richtung. Im Beispiel der Figur 3 wurde als Kompromiss für den Lichtempfänger eine Höhe gewählt, wo die X- und Y-Ausdehnung gleich ist. Dort ist aber der Empfangslichtfleck insgesamt immer noch recht groß.

Figur 4 zeigt nochmals den Strahlverlauf des remittierten Sendelichts 22 durch die Frontscheibe 38 in einer Draufsicht. Die von oben nach unten verlaufenden Strahlen erfahren je nach lateralem Auftreffpunkt auf die Frontscheibe 38 eine unterschiedliche Brechung. Der Strahlenverlauf hängt auch von dem Einfallswinkel und dem Material der Frontscheibe 38 ab. Wegen der Geometrie der Frontscheibe 38 ist für weiter außen verlaufende Strahlen der Effekt größer. Es entsteht eine sich mit dem Abstand zur Strahlmitte in X-Richtung vergrößernde Abweichung. Die strahlformende Wirkung ist daher besonders groß, wenn der Strahlquerschnitt des remittierten Sendelichts 22 die Größenordnung der Frontscheibe 38 erreicht.

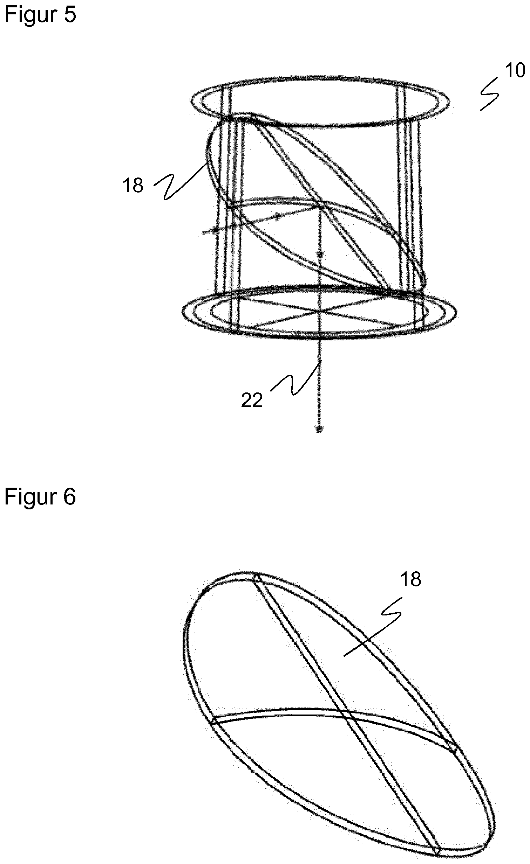

Figur 5 zeigt schematisch in nur einigen wenigen Komponenten des Laserscanners 10 eine gekrümmte oder mit einer Kontur versehene Spiegelfläche der Ablenkeinheit 18, um die beschriebene optische Wirkung der Frontscheibe 38 zu kompensieren. Dabei ist die Ablenkeinheit 18 von vergleichbarer Größe wie die Frontscheibe 38, so dass die optische Wirkung der Frontscheibe 38 besonders deutlich hervortritt. Diese Konstellation ergibt sich vor allem bei sehr kleinen Bauformen eines Laserscanners mit beispielsweise nur 5 cm Durchmesser der Frontscheibe 38 oder noch weniger, typischerweise bei einer Scheibendicke größer 1 mm.

Die Spiegelfläche ist bevorzugt als Freiform ausgebildet, die durch Optiksimulation aufgefunden wird. Das Ziel dabei ist, dass das System aus Frontscheibe 38 und Freiform der Ablenkeinheit 18 insgesamt ein Strahlbündel nicht deformiert. Man kann das so ausdrücken, dass ein parallel einfallendes Strahlenbündel das genannte System auch parallel verlässt. Alternativ wird nur der Astigmatismus korrigiert und eine gewünschte Strahlbündelungswirkung beibehalten oder erzeugt.

Figur 6 zeigt eine mögliche Formgebung des Spiegels der Ablenkeinheit 18. Die Geometrie erinnert an einen elliptischen Ausschnitt aus einem Zylinder- oder Kegelstumpfmantel. Die Mittenachse in Höhenrichtung oder Y-Richtung ist eine Symmetrieachse. Diese Mittenachse ist wie alle Oberflächenlinien längs der Höhenrichtung gerade. In X-Richtung oder lateraler Richtung ergibt sich eine symmetrische, monotone Krümmung. Unter Berücksichtigung der Symmetrien und der geometrischen Struktur in Höhenrichtung lässt sich die Form recht gut mit Polynomen für die Kontur in X-Richtung beschreiben.

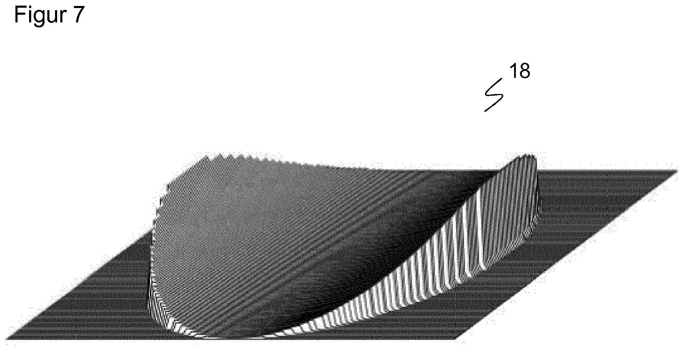

Figur 7 zeigt eine nicht mehr nur schematische, sondern konkrete und detaillierte Oberflächenform (surface sag) der Spiegelfläche der Ablenkeinheit 18 für eine beispielhafte Konstellation, wie sie sich durch Optiksimulation ergibt. Ein mögliches Vorgehen, um diese Oberflächenform aufzufinden, basiert auf Strahlverfolgung (ray tracing) und lässt sich wie folgt beschreiben.

Jeder Strahl, der durch ein bestimmtes Flächenstück der Frontscheibe 38 verläuft, erfährt eine bestimmte Brechung. Betrachtet wird nun ein in X- und Y-Richtung senkrecht einfallender Strahl, der also parallel zur Z-Koordinate der Ausbreitungsrichtung des Sendelichtstrahls 16 verläuft. Dieser Strahl wird nun bis zur Spiegelfläche verfolgt und dort der Auftreffort sowie die Abweichung des Auftreffwinkels von dem ursprünglich senkrecht verlaufenden Strahl bestimmt. Aus dieser Abweichung ergibt sich für den Auftreffort eine notwendige Orientierung der Spiegelfläche, um die Abweichung wieder rückgängig zu machen. Mit anderen Worten ist damit der für die gewünschte Kompensation notwendige Gradient am Auftreffort bekannt.

Durch entsprechendes Verfolgen einer Vielzahl von Strahlen lässt sich ein Netz von Stützpunkten des erforderlichen Gradienten auf der Spiegelfläche auffinden. Es gibt dann verschiedene Möglichkeiten, darauf die erforderliche Freiform abzuleiten. Zu nennen wäre numerische Integration, aber auch ein Funktionsfit beispielsweise eines zweidimensionalen X-Y-Polynoms einer der gewünschten Genauigkeit entsprechenden Ordnung.

Das Ergebnis ist, dass die Spiegelfläche jedem Strahl des die Frontscheibe 38 passierenden Strahlenbündels zumindest im Rahmen der Genauigkeit der Freiform wieder die gewünschte Richtung ohne Störeinfluss der Frontscheibe 38 gibt. Damit kann die Lichtfleckgröße auf dem Lichtempfänger 26 deutlich reduziert werden, beispielsweise mit der in Figur 7 dargestellten Oberflächenform auf einen Durchmesser von 30 µm. Das ist je nach Konstellation und Frontscheibe 38 eine Verkleinerung um einen Faktor von bis zu 30.

Die erläuterten Effekte der Frontscheibe 38 können nur mit einem mitbewegten optischen Element korrigiert werden. Das liegt daran, dass quasi der Astigmatismus mitrotiert, so dass ein stehendes optisches Element, beispielsweise die Empfangsoptik 24, nur für bestimmte Drehstellungen der Ablenkeinheit 18, aber nicht über deren gesamte Scanbewegung korrigieren könnte.

Die Umsetzung als Freiform einer Spiegelfläche der Ablenkeinheit 18 ist aber nur eine besonders einfache und kostengünstige Möglichkeit. Alternativ könnte auch eine den Astigmatismus korrigierende Linse an der Ablenkeinheit 18 angeordnet werden und mitrotieren. Die Position kann dabei sowohl zwischen Lichtsender 12 beziehungsweise Lichtempfänger 26 und Ablenkeinheit 18 praktisch um sich selbst auf der Drehachse rotierend als auch zwischen Ablenkeinheit 18 und Frontscheibe 38 exzentrisch neben dem Drehspiegel rotierend sein.

In einer Bauform eines Laserscanners ohne Drehspiegel, in der die Ablenkeinheit 18 ein Messkopf mit mitbewegtem Lichtsender 12 und Lichtempfänger 26 ist, drehen sich die Optiken ohnehin mit. Im Bezugssystem des Messkopfes selbst gibt es keine Drehung, und daher können die Optiken den Astigmatismus statisch korrigieren.

Wird das erläuterte optische Artefakt der Frontscheibe 38 gar nicht korrigiert, so führt das zu größeren Strahlquerschnitten. Lichtempfänger 26 kann entsprechend größer ausgebildet werden, aber dadurch ist nicht vermieden, dass mehr Fremdlicht eingefangen wird und sich somit Signal-Rauschverhältnis und Reichweite verschlechtern.

## Patentansprüche

1. Optoelektronischer Sensor (10), insbesondere Laserscanner, zur Erfassung von Objekten in einem Überwachungsbereich (20), wobei der Sensor (10) einen Lichtsender (12) zum Aussenden von Sendelicht (16), eine als Drehspiegel mit einer Spiegelfläche, nicht als Polygonspiegelrad ausgebildete bewegliche Ablenkeinheit (18) zur periodischen Ablenkung des Sendelichts (16), einen Lichtempfänger (26) zum Erzeugen eines Empfangssignals aus von Objekten in dem Überwachungsbereich (20) remittiertem Sendelicht (22), eine Steuer- und Auswertungseinheit (32) zur Erfassung von Informationen über Objekte in dem Überwachungsbereich (20) anhand des Empfangssignals sowie eine umlaufende Frontscheibe (38) mit einem Durchtrittbereich (40) für das Sendelicht (16) und/oder das remittierte Sendelicht (22) aufweist, wobei die Frontscheibe (38) zumindest im Durchtrittbereich (40) rotationssymmetrisch geformt ist,
**dadurch gekennzeichnet,**
**dass** ein mit der Ablenkeinheit (18) mitbewegtes optisches Element vorgesehen ist, das einen refraktiven Einfluss der Frontscheibe (38) auf hindurchtretendes Sendelicht (16) und/oder remittiertes Sendelicht (22) kompensiert, wobei die Spiegelfläche eine Krümmung aufweist und so als das mitbewegte optische Element fungiert oder auf der Ablenkeinheit (18) ein zusätzliches optisches Element vorgesehen ist, das sich mit der Ablenkeinheit (18) mitbewegt.

2. Sensor (10) nach Anspruch 1,
wobei die Spiegelfläche als Freiform ausgebildet ist.

3. Sensor (10) nach einem der vorhergehenden Ansprüche,
wobei die Spiegelfläche derart geformt ist, dass ein paralleles Strahlenbündel, das an dem Drehspiegel reflektiert wird und die Frontscheibe (38) durchdringt, wiederum parallel ist.

4. Sensor (10) nach einem der vorhergehenden Ansprüche,
wobei die Form der Spiegelfläche durch eine Strahlverfolgungssimulation bestimmt ist, bei der für eine Vielzahl senkrecht auf die Frontscheibe (38) auftreffender Strahlen der jeweilige Auftreffort auf der Spiegelfläche und dort eine kompensierende lokale Orientierung der Spiegelfläche bestimmt wird.

5. Sensor (10) nach einem der vorhergehenden Ansprüche,
wobei die Spiegelfläche in einer lateralen Richtung symmetrisch zu einer Mittenachse des Drehspiegels gekrümmt ist.

6. Sensor (10) nach einem der vorhergehenden Ansprüche,
wobei die Frontscheibe (38) und daher auch die Spiegelfläche in einer Höhenrichtung keine Krümmung aufweist oder wobei die Frontscheibe (38) in Höhenrichtung eine Krümmung aufweist, insbesondere kugel- oder kelchförmig geformt ist, und wobei die Spiegelfläche eine Krümmung in lateraler Richtung und in Höhenrichtung aufweist.

7. Sensor (10) nach einem der vorhergehenden Ansprüche,
wobei der Drehspiegel als Spritzgussteil hergestellt ist.

8. Sensor (10) nach einem der vorhergehenden Ansprüche,
wobei die Spiegelfläche die einzige Spiegelfläche des Drehspiegels ist.

9. Sensor (10) nach einem der vorhergehenden Ansprüche,
wobei der Drehspiegel einen Durchmesser von mindestens 50% oder mindestens 70% des Durchmessers der Frontscheibe (38) aufweist.

10. Sensor (10) nach einem der vorhergehenden Ansprüche,
der eine refraktive Sendeoptik (14) und/oder Empfangsoptik (24) aufweist.

11. Sensor (10) nach einem der vorhergehenden Ansprüche,
wobei die Steuer- und Auswertungseinheit (32) dafür ausgebildet ist, aus einer Lichtlaufzeit zwischen Aussenden des Sendelichts (16) und Empfangen des remittierten Sendelichts (22) einen Abstand des Objekts zu bestimmen.

12. Verfahren zur Erfassung von Objekten in einem Überwachungsbereich (20), bei dem Sendelicht (16) ausgesandt, mit Hilfe einer als Drehspiegel mit einer Spiegelfläche, nicht als Polygonspiegelrad ausgebildeten beweglichen Ablenkeinheit (18) periodisch abgelenkt, nach Remission an dem Objekt als remittiertes Sendelicht (22) wieder empfangen und in ein Empfangssignal gewandelt wird, um aus dem Empfangssignal eine Objektinformation zu erzeugen, wobei das Sendelicht (16) durch einen Durchtrittbereich (40) einer Frontscheibe (38) in den Überwachungsbereich (20) und/oder das remittierte Sendelicht (22) durch den Durchtrittbereich (40) zurück gelangt, wobei die Frontscheibe (38) zumindest im Durchtrittbereich (40) rotationssymmetrisch geformt ist,
**dadurch gekennzeichnet,**
**dass** mit der Ablenkeinheit (18) ein optisches Element mitbewegt wird, das einen refraktiven Einfluss der Frontscheibe (38) auf hindurchtretendes Sendelicht (16) und/oder remittiertes Sendelicht (22) kompensiert, wobei die Spiegelfläche eine Krümmung aufweist und so als das mitbewegte optische Element fungiert oder auf der Ablenkeinheit (18) ein zusätzliches optisches Element vorgesehen ist, das sich mit der Ablenkeinheit (18) mitbewegt.

## Claims

1. An optoelectronic sensor (10), in particular a laser scanner, for detecting objects in a monitoring area (20), the sensor (10) comprising a light transmitter (12) for transmitting transmitted light (16), a movable deflection unit (18) configured as a rotating mirror with a mirror surface, not as a polygon mirror wheel, for periodically deflecting the transmitted light (16), a light receiver (26) for generating a received signal from remitted transmitted light (22) that has been remitted from objects in the monitored area (20), a control and evaluation unit (32) for detecting information about objects in the monitored area (20) on the basis of the received signal, and a circumferential front screen (38) having a passage area (40) for the transmitted light (16) and/or the remitted transmitted light (22), the front screen (38) being formed with rotational symmetry at least in the passage area (40),
**characterized in that** an optical element is provided that is moved along with the deflection unit (18) and compensates a refractive influence of the front screen (38) on transmitted light (16) and/or remitted transmitted light (22) passing through, wherein the mirror surface has a curvature and thus functions as the optical element moved along with the mirror, or an additional optical element is provided that is moved along with the deflection unit (18).

2. The sensor (10) according to claim 1,
wherein the mirror surface is designed as a free-form.

3. The sensor (10) according to any of the preceding claims,
wherein the mirror surface is shaped such that a parallel beam of rays reflected at the rotating mirror and passing through the front screen (38) again is parallel.

4. The sensor (10) according to any of the preceding claims,
wherein the shape of the mirror surface is determined by a ray tracing simulation, wherein for a plurality of rays incident perpendicularly on the front screen (38) the respective point of incidence on the mirror surface and there a compensating local orientation of the mirror surface is determined.

5. The sensor (10) according to any of the preceding claims,
wherein the mirror surface is curved in a lateral direction symmetrically to a center axis of the rotating mirror.

6. The sensor (10) according to any of the preceding claims,
wherein the front screen (38) and therefore also the mirror surface has no curvature in a height direction or wherein the front screen (38) has a curvature in the height direction, in particular is spherically shaped or shaped like a chalice, and wherein the mirror surface has a curvature in the lateral direction and in the height direction.

7. The sensor (10) according to any of the preceding claims,
wherein the rotating mirror is manufactured as an injection molded part.

8. The sensor (10) according to any of the preceding claims,
wherein the mirror surface is the only mirror surface of the rotating mirror.

9. The sensor (10) according to any of the preceding claims,
wherein the rotating mirror has a diameter of at least 50% or at least 70% of the diameter of the front screen (38).

10. The sensor (10) according to any of the preceding claims,
which has a refractive transmission optics (14) and/or receiving optics (24).

11. The sensor (10) according to any of the preceding claims,
wherein the control and evaluation unit (32) is configured to determine a distance of the object from a light time of flight between transmission of the transmitted light (16) and reception of the remitted transmitted light (22).

12. A method for detecting objects in a monitored area (20), wherein transmitted light (16) is transmitted, is periodically deflected by means of a movable deflection unit (18) configured as a rotating mirror with a mirror surface, not as a polygonal mirror wheel, is received again as remitted transmitted light (22) after remission at the object and converted into a received signal in order to generate object information from the received signal, wherein the transmitted light (16) passes through a passage region (40) of a front screen (38) into the monitoring region (20) and/or the remitted transmitted light (22) passes back through the passage region (40), the front screen (38) being formed with rotational symmetry at least in the passage area (40),
**characterized in that** an optical element is moved along with the deflection unit (18) that compensates a refractive influence of the front screen (38) on transmitted light (16) and/or remitted transmitted light (22) passing through, wherein the mirror surface has a curvature and thus functions as the optical element moved along with the mirror, or an additional optical element is provided that is moved along with the deflection unit (18).

## Revendications

1. Capteur optoélectronique (10), en particulier scanner laser, pour détecter des objets dans une zone à surveiller (20), le capteur (10) comprenant un émetteur de lumière (12) pour émettre de la lumière d'émission (16), une unité de déviation mobile (18) qui est réalisée comme un miroir rotatif ayant une surface de miroir et non comme une roue à miroir polygonal et qui est destinée à dévier périodiquement la lumière d'émission (16), un récepteur de lumière (26) pour générer un signal de réception à partir de la lumière d'émission (22) réémise par des objets dans la zone à surveiller (20), une unité de commande et d'évaluation (32) pour acquérir des informations sur des objets dans la zone à surveiller (20) sur la base du signal de réception, et une vitre frontale périphérique (38) ayant une zone de passage (40) pour la lumière d'émission (16) et/ou pour la lumière d'émission réémise (22), la vitre frontale (38) étant formée à symétrie de révolution au moins dans la zone de passage (40),
**caractérisé en ce que**
il est prévu un élément optique qui est déplacé avec l'unité de déviation (18) et qui compense une influence réfractive de la vitre frontale (38) sur la lumière d'émission (16) et/ou sur la lumière d'émission réémise (22) qui passe(nt), et la surface de miroir présente une courbure et fait ainsi office d'élément optique déplacé, ou un élément optique supplémentaire est prévu sur l'unité de déviation (18), qui se déplace avec l'unité de déviation (18).

2. Capteur (10) selon la revendication 1,
dans lequel la surface de miroir est réalisée comme une forme libre.

3. Capteur (10) selon l'une des revendications précédentes,
dans lequel la surface de miroir est formée de telle sorte qu'un faisceau de rayons parallèle qui est réfléchi sur le miroir rotatif et qui traverse la vitre frontale (38) est de nouveau parallèle.

4. Capteur (10) selon l'une des revendications précédentes,
dans lequel la forme de la surface de miroir est déterminée par une simulation de poursuite de rayons dans laquelle on détermine, pour une pluralité de rayons incidents perpendiculairement sur la vitre frontale (38), le point d'incidence respectif sur la surface de miroir et, à cet endroit, une orientation locale compensatrice de la surface de miroir.

5. Capteur (10) selon l'une des revendications précédentes,
dans lequel la surface de miroir est incurvée dans une direction latérale symétriquement par rapport à un axe central du miroir rotatif.

6. Capteur (10) selon l'une des revendications précédentes,
dans lequel la vitre frontale (38) et donc également la surface de miroir ne présentent pas de courbure en direction de la hauteur, ou la vitre frontale (38) présente une courbure en direction de la hauteur et est formée en particulier en forme sphérique ou en forme de gobelet, et la surface de miroir présente une courbure en direction latérale et en direction de la hauteur.

7. Capteur (10) selon l'une des revendications précédentes,
dans lequel le miroir rotatif est réalisé sous forme de pièce moulée par injection.

8. Capteur (10) selon l'une des revendications précédentes,
dans lequel la surface de miroir est la seule surface de miroir du miroir rotatif.

9. Capteur (10) selon l'une des revendications précédentes,
dans lequel le miroir rotatif présente un diamètre d'au moins 50% ou d'au moins 70% du diamètre de la vitre frontale (38).

10. Capteur (10) selon l'une des revendications précédentes, comprenant une optique d'émission (14) et/ou une optique de réception (24) réfractive(s).

11. Capteur (10) selon l'une des revendications précédentes,
dans lequel l'unité de commande et d'évaluation (32) est réalisée pour déterminer une distance de l'objet à partir d'un temps de parcours de lumière entre l'émission de la lumière d'émission (16) et la réception de la lumière d'émission réémise (22).

12. Procédé pour détecter des objets dans une zone à surveiller (20), dans lequel une lumière d'émission (16) est émise, puis déviée périodiquement à l'aide d'une unité de déviation mobile (18) qui est réalisée comme un miroir rotatif ayant une surface de miroir et non comme une roue à miroir polygonal, après réémission sur l'objet ladite lumière est reçue sous forme de lumière d'émission réémise (22) et transformée en un signal de réception pour générer une information sur l'objet à partir du signal de réception, la lumière d'émission (16) retourne dans la zone à surveiller (20) à travers une zone de passage (40) d'une vitre frontale (38) et/ou la lumière d'émission réémise (22) retourne à travers la zone de passage (40), la vitre frontale (38) est formée à symétrie de révolution au moins dans la zone de passage (40),
**caractérisé en ce que**
un élément optique est déplacé avec l'unité de déviation (18), qui compense une influence réfractive de la vitre frontale (38) sur la lumière d'émission (16) et/ou sur la lumière d'émission réémise (22) qui passe(nt), et la surface de miroir présente une courbure et fait ainsi office d'élément optique déplacé, ou un élément optique supplémentaire est prévu sur l'unité de déviation (18), qui se déplace avec l'unité de déviation (18).
